# FASCICULE DE BREVET EUROPEEN

(11) **EP 1 188 620 B1**
(45) Date de publication et mention de la délivrance du brevet: **03.11.2004**
(21) Numéro de dépôt: 01402370.9
(22) Date de dépôt: 14.09.2001
(51) Int. Cl.: B60R 21/02

(54) **Planche de bord de véhicule**
Instrumententafel für ein Kraftfahrzeug
Vehicle dashboard

(30) Priorité: 19.09.2000 FR 0011912
(43) Date de publication de la demande: 20.03.2002
(73) Titulaire: Renault s.a.s., 92100 Boulogne Billancourt (FR)
(72) Inventeur: Pastourel, Dominique, 91730 Boissy sous St-Yon (FR); Villain, Antony, 94270 Le Kremlin Bicetre (FR)

(56) Documents cités:
- CH-A- 419 868
- FR-A- 2 692 861
- PATENT ABSTRACTS OF JAPAN vol. 2000, no. 01, 31 janvier 2000 (2000-01-31) & JP 11 268588 A (KASAI KOGYO CO LTD), 5 octobre 1999 (1999-10-05)
- PATENT ABSTRACTS OF JAPAN vol. 1997, no. 01, 31 janvier 1997 (1997-01-31) & JP 08 230567 A (NISSAN DIESEL MOTOR CO LTD), 10 septembre 1996 (1996-09-10)
- PATENT ABSTRACTS OF JAPAN vol. 1997, no. 05, 30 mai 1997 (1997-05-30) & JP 09 002190 A (TOYOTA MOTOR CORP), 7 janvier 1997 (1997-01-07)

## Description

La présente invention se rapporte au domaine technique des systèmes assurant la sécurité du conducteur d'un véhicule. Plus particulièrement, elle concerne un système de protection du conducteur intégré à la planche de bord du véhicule.

Les véhicules de transport de marchandises, du type par exemple fourgonnette, doivent disposer du plus grand espace de rangement possible. Ainsi, autorise-t-elle fréquemment le retrait du siège du passager avant de façon à libérer le plus de surface utile pour le transport de marchandises. Dans cette configuration, des marchandises peuvent être placées à côté du siège du conducteur sur l'emplacement occupé habituellement par le siège passager. Ceci pose un problème pour la sécurité du conducteur, puisque le véhicule ne comporte généralement pas de système de protection placé entre le conducteur et les marchandises, et certains déplacements du véhicule, tels qu'un virage brusque, pourraient amener certaines marchandises à venir heurter le conducteur. Néanmoins, il est difficilement envisageable de disposer, de façon permanente, d'une protection visant à protéger le flanc du siège conducteur, celle-ci pouvant s'avérer fort encombrante lorsque le siège passager avant est installé, et qu'une telle protection n'est alors plus nécessaire.

La présente invention vise à obtenir une protection efficace du conducteur contre d'éventuels objets, placés à ses côtés à l'emplacement du siège passager, qui puisse être mise en place facilement, et qui, en position de non utilisation, présente un faible encombrement.

Dans ce but, elle proposé une planche de bord d'un véhicule comprenant un siège conducteur et au moins un siège passager avant, caractérisée en ce qu'elle comprend un élément mobile vertical qui peut être amené d'une position de non utilisation dans laquelle il s'étend verticalement sensiblement en face de l'emplacement du siège passager avant, à une position d'utilisation pour protection d'un conducteur dans laquelle il s'étend verticalement sensiblement entre le siège du conducteur et l'emplacement du siège passager avant.

Du document JP-A- 11 26 85 88 est connu une planche de bord selon le préambule de la revendication 1. Cette planche de bord présente une tablette horizontale mobile entre deux positions.

Selon une autre caractéristique de l'invention, l'élément mobile pivote autour d'un axe de la position de non utilisation à la position d'utilisation.

Selon une autre caractéristique de l'invention, l'élément mobile est une portion d'une traverse de la planche de bord, qui pivote autour d'un axe vertical.

Selon une autre caractéristique de l'invention, l'élément mobile est maintenu dans sa position d'utilisation par un pied de maintien, dont une extrémité est reliée au plancher du véhicule, par une relation de pivot, et dont l'extrémité opposée peut coopérer avec l'élément mobile pour se fixer sur celui-ci.

Selon une autre caractéristique de l'invention, l'élément mobile intègre une tablette, qui peut être extraite d'une position de non utilisation, où elle est cachée à l'intérieur de l'élément mobile, à une position d'utilisation où elle est, au moins en partie, en saillie par rapport à l'élément mobile. La tablette peut être extraite selon une première position d'utilisation, lorsque l'élément mobile est dans sa position d'utilisation, et selon une seconde position d'utilisation, lorsque l'élément mobile est dans sa position de non utilisation.

Selon une autre caractéristique de l'invention, la tablette peut être adaptée à être extraite de l'élément mobile selon une direction verticale et à être rabattue dans un plan sensiblement horizontal par un mouvement de rotation.

Selon une autre caractéristique de l'invention, l'élément mobile comprend un coussin gonflable, et/ou interface homme/machine.

Selon une autre caractéristique de l'invention, la planche de bord comprend au moins un espace de rangement dont le socle peut s'extraire de la planche de bord lorsque l'élément mobile est en position d'utilisation.

D'autres caractéristiques et avantages de l'invention apparaîtront à la lecture de la description qui va suivre en référence aux dessins dans lesquels :
- la figure 1 représente une vue d'ensemble de l'intérieur de l'habitacle d'un véhicule, de type fourgonnette, comprenant une planche de bord équipée du système de protection selon l'invention, le système étant dans une position de non utilisation,
- la figure 2 représente une partie simplifiée de la vue de la figure 1, le système de protection selon l'invention étant dans une position d'utilisation,
- la figure 3 représente une variante du système de protection selon l'invention,
- la figure 4 représente un aménagement possible de la planche de bord du véhicule équipée du système de protection selon l'invention.

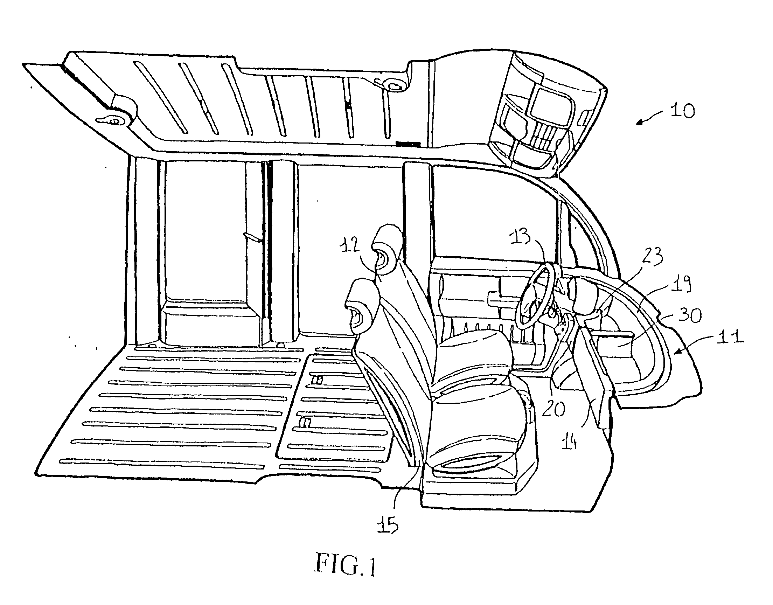

Sur la figure 1, on peut voir la partie avant de l'intérieur de l'habitacle d'un véhicule 10, de type fourgonnette. Celui-ci comprend le siège conducteur 12, ainsi que le siège passager 15, situés l'un à côté de l'autre et faisant tous deux face à la planche de bord du véhicule 11.

La planche de bord 11 se compose d'une première traverse 20 en partie droite, de direction moyenne sensiblement horizontale, et d'une seconde traverse 19 recourbée en forme de U évasé. Ces traverses 19,20 sont typiquement constituées par des profilés creux. La planche de bord 11 supporte, de façon habituelle, l'organe de commande de la direction du véhicule 10, notamment le volant 13. Les première et seconde traverses 19,20 se rejoignent sensiblement à leurs extrémités et délimitent ente elles des espaces vides, pouvant éventuellement servir de rangements. Un élément de renfort 30 relie les deux traverses 19,20 sensiblement en leur milieu.

La première traverse 20 se divise en un élément fixe 23, relié de façon rigide à la carrosserie du véhicule 10, et un élément mobile 14, de forme sensiblement parallèlépipédique, qui peut pivoter par rapport au premier selon un axe sensiblement vertical A par le biais d'une charnière 18 montée sur le renfort 30, et sur l'élément fixe 23.

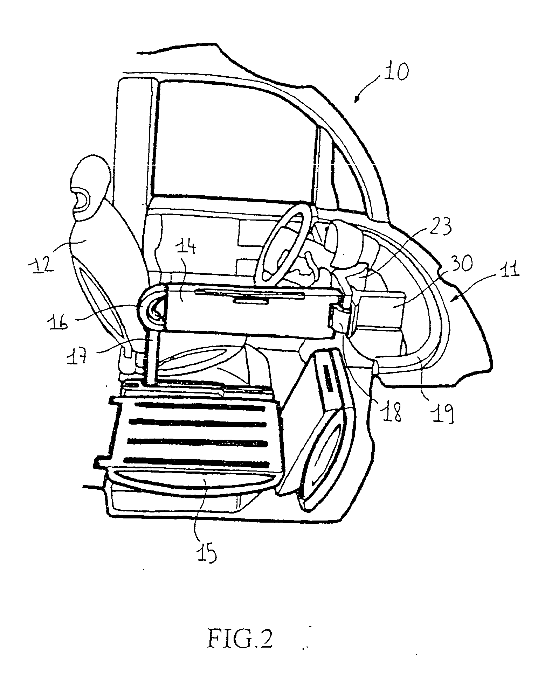

Sur la figure 1, l'élément mobile 14 est représenté en position de non utilisation, pour laquelle il vient en prolongement de l'élément fixe 23. Sur la figure 2, l'élément mobile 14 est représenté en position d'utilisation pour laquelle il est s'étend selon une direction sensiblement perpendiculaire à la position de non utilisation.

Sur la figure 2, le siège passager 15 est représenté dans une position escamotée, mettant en évidence l'apport, dans une telle configuration, d'espace supplémentaire pouvant être dédié au transport de marchandises. Le siège passager 15 peut ne pas être escamotable mais pouvoir être complètement retiré du véhicule 10.

Le maintien de l'élément mobile 14 dans la position d'utilisation est assurée par un pied de maintien 17, qui peut s'escamoter dans le plancher du véhicule 10 lorsque l'élément mobile 14 est dans la position de non utilisation. Le pied de maintien 17 est lié à l'une de ses extrémités au plancher par rapport auquel il peut pivoter, et comporte à son extrémité opposé des moyens de fixation 16 venant coopérer avec l'extrémité libre de l'élément mobile 14.

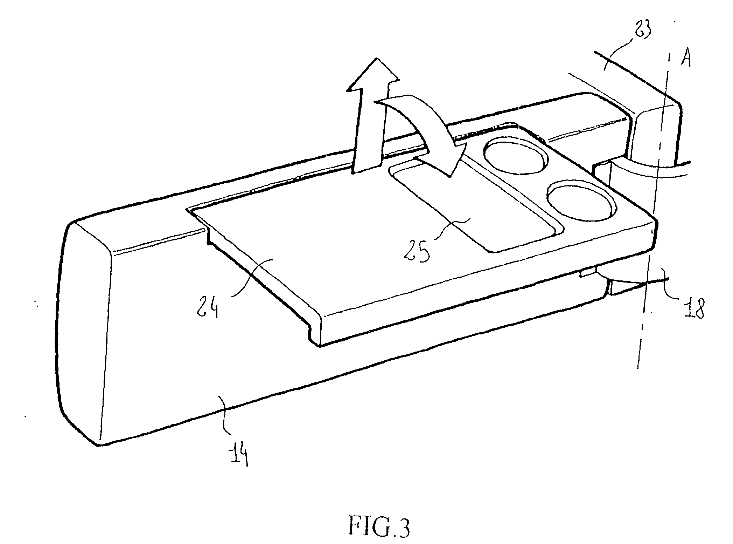

L'élément mobile 14 peut servir de support à des éléments divers. La figure 3 représente une variante d'élément mobile 14 qui intègre une tablette 24, qui peut s'extraire de l'élément mobile 14 selon une direction verticale représentée par la flèche droite, et être rabattue dans un plan sensiblement horizontale par un mouvement de rotation représentée par la flèche courbe. La tablette 24 peut comporter des empreintes 25 pour faciliter le maintien d'objets tels que des crayons, cahier, bouteilles, etc. Sur la figure 3, la tablette 24 est représentée de telle sorte qu'elle ne peut être rabattue, dans un plan sensiblement horizontal, que d'un seul côté par rapport au plan médian de l'élément mobile 14, si bien que son utilisation est essentiellement réservée au conducteur du véhicule 10, lorsque l'élément mobile 14 est dans la position d'utilisation. Selon une autre variante de l'invention non représentée, la tablette peut être rabattue indifféremment d'un côté ou de l'autre par rapport au plan médian de l'élément mobile 14 et ainsi être utilisée par le conducteur du véhicule lorsque l'élément mobile 14 est dans la position d'utilisation, ou par le passager avant lorsque l'élément mobile 14 est dans la position de non utilisation.

L'élément mobile 14 peut également servir de support, ou intégrer directement une interface homme/machine, comme par exemple un micro-ordinateur et/ou des moyens de télécommunications, tels qu'un téléphone, un système de navigation, éventuellement une interface permettant un accès à Internet, etc.

L'élément mobile 14 peut aussi contenir un sac gonflable de protection, qui se gonfle en cas de choc du véhicule venant ainsi éventuellement compléter des sacs gonflables latéraux placés du côté de l'ouvrant adjacent au conducteur.

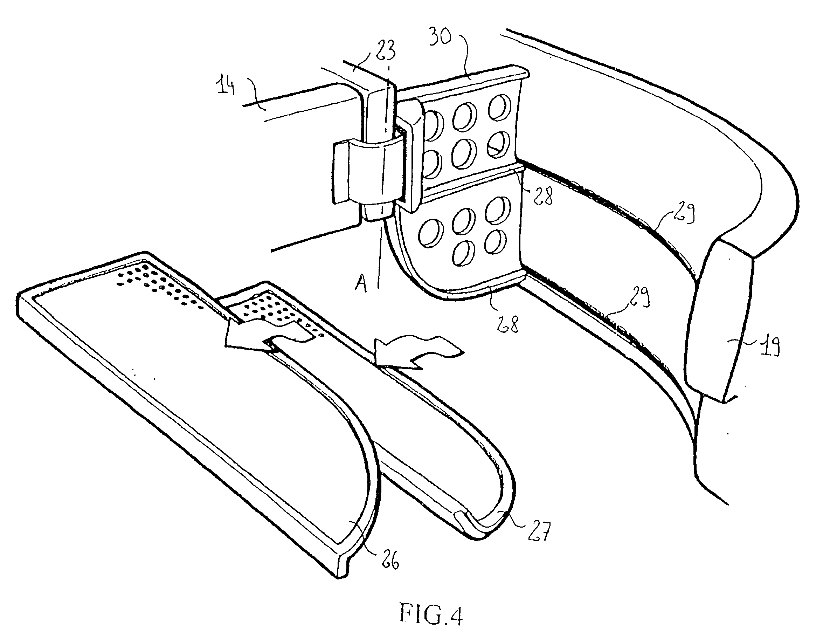

En position de non utilisation, l'élément mobile 14 définit avec la seconde traverse 19 et un premier socle 26 un espace de rangement. Un second socle 27 (visible sur la figure 4) placé en dessous du premier socle 26 peut lui aussi définir un espace de rangement. Les deux socles 26,27 sont montés sur la planche de bord 11 au moyen de rainures 29 et de guides 28 qui autorisent leur retrait éventuel. Un tel retrait, représenté par les deux flèches ondulées, peut être particulièrement utile lorsque l'élément mobile 14 est en position d'utilisation, et que le siège passager 15 est retiré, de façon à libérer le plus d'espace possible pour le chargement de marchandises.

## Revendications

1. Planche de bord (11) d'un véhicule (10) comprenant un siège conducteur (12) et au moins un siège passager avant (15), **caractérisée en ce qu'**elle comprend un élément mobile (14) vertical qui peut être amené d'une position de non utilisation dans laquelle il s'étend verticalement sensiblement en face de l'emplacement du siège passager avant (15), à une position d'utilisation pour protection d'un conducteur dans laquelle il s'étend verticalement sensiblement entre le siège du conducteur (12) et l'emplacement du siège passager avant (15).

2. Planche de bord (11) selon la revendication 1, **caractérisée en ce que** l'élément mobile (14) pivote autour d'un axe A de la position de non utilisation à la position d'utilisation.

3. Planche de bord (11) selon la revendication 2, **caractérisée en ce que** l'élément mobile (14) pivote autour d'un axe vertical A.

4. Planche de bord (11) selon les revendications 1 à 3, **caractérisée en ce que** l'élément mobile (14) est une portion d'une traverse (20) de la planche de bord (11).

5. Planche de bord (11) selon les revendications 1 à 4, **caractérisée en ce que** l'élément mobile (14) est maintenu dans sa position d'utilisation par un pied de maintien (17), dont une extrémité est reliée au plancher du véhicule (10), par une relation de pivot, et dont l'extrémité opposée comprend des moyens de fixation (16) adaptés pour coopérer avec l'élément mobile (14) pour se fixer sur celui-ci.

6. Planche de bord (11) selon les revendications 1 à 5, **caractérisée en ce que** l'élément mobile (14) intègre une tablette (24).

7. Planche de bord (11) selon la revendication 6, **caractérisée en ce que** la tablette (24) peut être extraite d'une position de non utilisation, où elle est cachée à l'intérieur de l'élément mobile (14), à une position d'utilisation où elle est, au moins en partie, en saillie par rapport à l'élément mobile (14).

8. Planche de bord (11) selon la revendication 7, **caractérisée en ce que** la tablette (24) peut être extraite selon une première position d'utilisation, lorsque l'élément mobile (14) est dans sa position d'utilisation, et selon une seconde position d'utilisation, lorsque l'élément mobile (14) est dans sa position de non utilisation.

9. Planche de bord (11) selon les revendications 7 à 8, **caractérisée en ce que** la tablette (24) est adaptée à être extraite de l'élément mobile (14) selon une direction verticale et à être rabattue dans un plan sensiblement horizontal par un mouvement de rotation.

10. Planche de bord (11) selon les revendications 1 à 9, **caractérisée en ce que** l'élément mobile (14) comprend un coussin gonflable et/ou une interface homme/machine.

11. Planche de bord (11) selon les revendications 1 à 10, **caractérisée en ce qu'**elle comprend au moins un espace de rangement dont le socle (26,27) peut s'extraire de la planche de bord (11) lorsque l'élément mobile (14) est en position d'utilisation.

## Patentansprüche

1. Instrumententafel (11) eines Fahrzeugs (10), welches einen Fahrersitz (12) und wenigstens einen vorderen Beifahrersitz (15) aufweist,
**dadurch gekennzeichnet, dass** sie ein mobiles, vertikales Element (14) aufweist, das aus einer Nicht-Verwendungsposition, in welcher es sich im Wesentlichen gegenüber der Stelle des vorderen Beifahrersitzes (15) vertikal erstreckt, in eine Verwendungsposition zum Schutz eines Fahrers gebracht werden kann, in welcher es sich im Wesentlichen zwischen dem Fahrersitz (12) und der des Stelle des vorderen Beifahrersitzes (15) vertikal erstreckt.

2. Instrumententafel (11) gemäß Anspruch 1, **dadurch gekennzeichnet, dass** das mobile Element (14) sich um eine Achse A von der Position der Nicht-Verwendung in die Position der Verwendung dreht.

3. Instrumententafel (11) gemäß Anspruch 2, **dadurch gekennzeichnet, dass** das mobile Element (14) um eine vertikale Achse A dreht.

4. Instrumententafel (11) gemäß den Ansprüchen 1 bis 3, **dadurch gekennzeichnet, dass** das mobile Element (14) ein Teil eines Querträgers (20) der Instrumententafel (11) ist.

5. Instrumententafel (11) gemäß den Ansprüchen 1 bis 4, **dadurch gekennzeichnet, dass** das mobile Element (14) in seiner Verwendungsposition gehalten wird durch einen Haltefuß (17), von dem ein Ende mit dem Fußboden des Fahrzeugs (10) durch eine drehbare Verbindung verbunden ist und dessen gegenüberliegendes Ende Befestigungsmittel (16) aufweist, die angepasst sind, mit dem mobilen Element (14) zusammenzuwirken, um sich auf diesem zu befestigen.

6. Instrumententafel (11) gemäß den Ansprüchen 1 bis 5, **dadurch gekennzeichnet, dass** das mobile Element (14) eine Tischplatte (24) integriert.

7. Instrumententafel (11) gemäß Anspruch 6, **dadurch gekennzeichnet, dass** die Tischplatte (24) aus einer Position der Nicht-Verwendung, in der sie im Inneren des mobilen Elements (14) verstaut ist, in eine Verwendungsposition herausgezogen werden kann, in der sie, zumindest teilweise, im Vergleich zum mobilen Element (14) herausragt.

8. Instrumententafel (11) gemäß Anspruch 7, **dadurch gekennzeichnet, dass** die Tischplatte (24) herausgezogen werden kann gemäß einer ersten Verwendungsposition, wenn das mobile Element (14) in seiner Verwendungsposition ist, und gemäß einer zweiten Verwendungsposition, wenn das mobile Element (14) in seiner Nicht-Verwendungsposition ist.

9. Instrumententafel (11) gemäß den Ansprüchen 7 bis 8, **dadurch gekennzeichnet, dass** die Tischplatte (24) angepasst ist, aus dem mobilen Element (14) gemäß einer vertikalen Richtung herausgezogen zu werden und durch eine Drehbewegung in eine im Wesentlichen horizontale Ebene geklappt zu werden.

10. Instrumententafel (11) gemäß den Ansprüchen 1 bis 9, **dadurch gekennzeichnet, dass** das mobile Element (14) ein aufblähbares Kissen und/oder eine Mensch-/Maschine-Schnittstelle aufweist.

11. Instrumententafel (11) gemäß den Ansprüchen 1 bis 10, **dadurch gekennzeichnet, dass** sie wenigstens einen Stauraum aufweist, dessen Grundplatte (26, 27) aus der Instrumententafel (11) herausgenommen werden kann, wenn das mobile Element (14) in Verwendungsposition ist.

## Claims

1. A dashboard (11) of a vehicle (10) comprising a driver's seat (12) and at least one front passenger seat (15), **characterised in that** it comprises a vertical moving member (14) which may be moved from a position of non-use in which it extends vertically substantially facing the location of the front passenger seat (15) to a position of use for the protection of a driver in which it extends vertically substantially between the driver's seat (12) and the location of the front passenger seat (15).

2. A dashboard (11) as claimed in claim 1, **characterised in that** the moving member (14) pivots about an axis (A) from the position of non-use to the position of use.

3. A dashboard (11) as claimed in claim 2, **characterised in that** the moving member (14) pivots about a vertical axis (A).

4. A dashboard (11) as claimed in claims 1 to 3, **characterised in that** the moving member (14) is a portion of a cross member (20) of the dashboard (11).

5. A dashboard (11) as claimed in claims 1 to 4, **characterised in that** the moving member (14) is held in its position of use by a retaining foot (17), an end of which is secured to the floor of the vehicle (10) by a pivot relationship, and the opposing end of which comprises fastening means (16) adapted to cooperate with the moving member (14) in order to be secured thereon.

6. A dashboard (11) as claimed in claims 1 to 5, **characterised in that** the moving member (14) integrates a panel (24).

7. A dashboard (11) as claimed in claim 6, **characterised in that** the panel (24) may be extracted from a position of non-use, in which it is concealed within the moving member (14), to a position of use in which it is, at least partially, projecting with respect to the moving member (14).

8. A dashboard (11) as claimed in claim 7, **characterised in that** the panel (24) may be extracted into a first position of use when the moving member (14) is in its position of use and into a second position of use when the moving member (14) is in its position of non-use.

9. A dashboard (11) as claimed in claims 7 to 8, **characterised in that** the panel (24) may be adapted to be extracted from the moving member (14) in a vertical direction and to be folded down into a substantially horizontal plane by a rotary movement.

10. A dashboard (11) as claimed in claims 1 to 9, **characterised in that** the moving member (14) comprises an inflatable airbag and/or a man/machine interface.

11. A dashboard (11) as claimed in claims 1 to 10, **characterised in that** it comprises at least one storage space whose base (26, 27) may be extracted from the dashboard (11) when the moving member (14) is in its position of use.
